# EUROPEAN PATENT APPLICATION

(11) **EP 3 943 468 A1**
(43) Date of publication of application: **26.01.2022**
(21) Application number: 19922074.0
(22) Date of filing: 26.12.2019
(51) Int. Cl.: C04B 35/569, C08K 3/34, C08L 101/00, C09K 5/14

(54) **FILLER, MOLDED BODY, HEAT DISSIPATING MATERIAL**

(30) Priority: 22.03.2019 JP 2019055197
(71) Applicant: Fujimi Incorporated, Kiyosu-shi, Aichi 452-8502 (JP)
(72) Inventor: USHIDA Naoki, Kiyosu-shi, Aichi 452-8502 (JP); MASUDA Yuji, Kiyosu-shi, Aichi 452-8502 (JP); SATO Mina, Kiyosu-shi, Aichi 452-8502 (JP); SATO Kazuto, Kiyosu-shi, Aichi 452-8502 (JP); ISAYAMA Takuya, Kiyosu-shi, Aichi 452-8502 (JP)
(74) Representative: Fujimoto, Naho
(86) International application number: PCT/JP2019/051341
(87) International publication number: WO 2020/194974

(57) **Abstract**

There are provided a filler capable of increasing the thermal conductivity of a molded body of a resin composition obtained by being blended in resins, such as plastics, curable resins, or rubbers, and a molded body and a heat dissipating material having high thermal conductivity. A resin composition containing a filler and a resin is molded to give a molded body, and a heat dissipating material is obtained from the molded body. The filler contains secondary particles which are sintered bodies of powder containing primary particles of ceramic. The filler has a specific surface area measured by the BET method of 0.25 m²/g or less and granule strength measured by a microcompression test of 45 MPa or more.

## Description

### Technical Field

The present invention relates to a filler, a molded body, and a heat dissipating material.

### Background Art

For the purpose of imparting thermal conductivity to a molded body of a resin composition containing resins, such as plastics, curable resins, or rubbers, a filler is added to the resin composition in some cases. For example, PTL 1 discloses a filler increasing the thermal conductivity of a molded body of a resin composition. However, the molded body of the resin composition has been required to further improve the thermal conductivity in some cases.

### Citation List

Patent Literature
PTL 1: JP 2019-1849 A

### Summary of Invention

### Technical Problem

It is an object of the present invention to provide a filler capable of increasing the thermal conductivity of a molded body of a resin composition obtained by being blended in resins, such as plastics, curable resins, or rubbers, and a molded body and a heat dissipating material having high thermal conductivity.

### Solution to Problem

A filler according to one aspect of the present invention contains secondary particles which are sintered bodies of powder containing primary particles of ceramic, in which the specific surface area measured by the BET method is 0.25 m²/g or less and the granule strength measured by a microcompression test is 45 MPa or more.

A molded body according to another aspect of the present invention is a molded body of a resin composition containing the filler according to one aspect described above and a resin.

A heat dissipating material according to a still another aspect of the present invention contains the molded body according to another aspect described above.

### Advantageous Effects of Invention

The filler of the present invention can increase the thermal conductivity of a molded body of a resin composition obtained by being blended in resins, such as plastics, curable resins, or rubbers. The molded body and the heat dissipating material of the present invention have high thermal conductivity.

### Brief Description of Drawings

FIG. 1 is a graph showing the specific surface area of fillers in Examples and Comparative Example;
FIG. 2 is a graph showing the granule strength of the fillers in Examples and Comparative Example;
FIG. 3 is a graph showing the thermal conductivity of molded bodies of resin compositions containing the fillers in Examples and Comparative Example; and
FIG. 4 illustrate SEM images of the surfaces and the cut surfaces of the fillers of Examples and Comparative Example.

### Description of Embodiments

One embodiment of the present invention will now be described in detail. The following embodiment illustrates an example of the present invention, and the present invention is not limited to this embodiment. The following embodiment can be variously altered or modified, and embodiments including such alternations or modifications can also be included in the present invention.

A filler in this embodiment contains secondary particles which are sintered bodies of powder containing primary particles of ceramic. As the physical properties of the filler in this embodiment, the specific surface area measured by the BET method is 0.25 m²/g or less and the granule strength measured by a microcompression test is 45 MPa or more.

The filler of this embodiment having such a configuration can form a resin composition by being blended in resins, such as plastics, curable resins, or rubbers. The resin composition contains the filler of this embodiment and a resin but may contain only the filler of this embodiment and a resin or may contain a blend of the filler of this embodiment and a resin with other components, such as reinforcing materials and additives.

A molded body molded from the resin composition containing the filler of this embodiment has high thermal conductivity and mechanical strength due to the action of the filler of this embodiment, and thus can be used as a heat dissipating material, for example. The heat dissipating material may contain only the molded body of the resin composition containing the filler of this embodiment or may contain the molded body and other components. The shape and a molding method of the molded body are not particularly limited.

Hereinafter, the filler of this embodiment, the resin composition, the molded body, and the heat dissipating material are described in more detail.

The filler of this embodiment contains sintered bodies (secondary particles) of powder containing primary particles of ceramic. The filler of this embodiment can be manufactured by granulating and sintering the powder containing the primary particles of the ceramic. The powder containing the primary particles of the ceramic may contain only the primary particles of the ceramic or may contain the primary particles of the ceramic and particles of other components, such as additives. Examples of the additives include, for example, sintering aids and resins serving as binders for granulation.

Examples of the binders include thermoplastic resins and thermosetting resins. Examples of the thermoplastic resins include, for example, polyvinyl alcohol, polyvinyl pyrrolidone, an acrylonitrile-styrene copolymer, an acrylonitrile-butadiene-styrene copolymer, an isobutylene-maleic anhydride copolymer, an acrylic resin, polycarbonate, polyamide, and the like. Examples of the thermosetting resins include, for example, an epoxy resin, a phenol resin, a melamin resin, an unsaturated polyester resin, and the like.

Examples of the type of the ceramic include, but are not particularly limited to, silicon carbide (SiC), silicon nitride (Si₃N₄), silicon oxide (SiO₂), aluminum nitride (AlN), aluminum oxide (Al₂O₃), zirconium oxide (ZrO₂), titanium oxide (TiO₂), boron nitride (BN), zinc oxide (ZnO), and magnesium oxide (MgO), for example. Among the ceramic above, silicon carbide is particularly preferable.

The average particle diameter of the primary particles (average primary particle diameter) of the ceramic serving as a raw material of the filler in this embodiment is not particularly limited and may be set to 0.1 µm or more and 50 µm or less. When the average primary particle diameter is less than 0.1 µm, there is a risk that the secondary particles which are sintered bodies becomes excessively dense. In contrast, when the average primary particle diameter exceeds 50 µm, there is a risk that granulation become difficult, making it difficult to obtain the secondary particles which are sintered bodies. The average primary particle diameter of the primary particles of the ceramic can be measured by an electrical resistance method, for example.

The specific surface area of the filler of this embodiment measured by the BET method needs to be 0.25 m²/g or less. The fact that the specific surface area of the filler exceeds 0.25 m²/g means that necking between the primary particles in granulation is insufficient, and thus there is a risk that the effect of increasing the thermal conductivity and the mechanical strength of the molded body of the resin composition is not sufficiently exhibited due to an increase in the interfacial resistance of the filler.

The granule strength of the filler of this embodiment measured by the microcompression test needs to be 45 MPa or more. When the granule strength of the filler is less than 45 MPa, the filler is broken in molding of the resin composition, so that the interfacial resistance increases, and therefore there is a risk that the effect of increasing the thermal conductivity and the mechanical strength of the molded body of the resin composition is not sufficiently exhibited. Further, there is a risk that the melt viscosity of the resin composition increases in molding, resulting in reduced moldability. As a microcompression testing device capable of measuring the granule strength of the filler in this embodiment, a microcompression testing device MCT-200 manufactured by Shimadzu Corporation is mentioned, for example.

The average particle diameter (average secondary particle diameter) of the filler in this embodiment is not particularly limited and may be set to 1 µm or more and 200 µm or less. When the average secondary particle diameter of the filler is less than 1 µm, there is a risk that the interfacial resistance of the filler increases, so that the thermal conductivity of the molded body of the resin composition is lowered. Further, there is a risk that the moldability of the resin composition is lowered. In contrast, when the average secondary particle diameter of the filler exceeds 200 µm, the particle diameter of the filler, in the case of molding a sheet as the molded body of the resin composition, increases relative to the thickness of the sheet, and therefore there is a risk that inconvenience of difficulty in molding the sheet arises. The average secondary particle diameter of the filler can be measured by a laser diffraction/scattering method, for example.

The ratio between the average primary particle diameter of the ceramic and the average secondary particle diameter of the filler is preferably 1:5 to 1:200 in terms of ease of granulation.

In the filler in which the ratio between the average primary particle diameter of the ceramic and the average secondary particle diameter of the filler is 1:100 to 1:200, the granule strength of the filler is more preferably 750 MPa or more and the specific surface area of the filler is more preferably 0.16 m²/g or less from the viewpoint of thermal conductivity.

In the filler in which the ratio between the average primary particle diameter of the ceramic and the average secondary particle diameter of the filler is 1:5 to 1:20, the granule strength of the filler is more preferably 30 MPa or more and 100 MPa or less and the specific surface area of the filler is more preferably 0.2 m²/g or more and 0.5 m²/g or less and still more preferably 0.2 m²/g or more and 0.4 m²/g or less from the viewpoint of thermal conductivity.

The irregular shape (fractal dimension) of the surface of the filler in this embodiment is preferably larger because the irregular shape has an action of increasing the thermal conductivity of the molded body of the resin composition by increasing contact points between the fillers.

The number per unit mass or unit volume of the fillers contained in the resin composition is preferably larger. When the number per unit mass or unit volume of the fillers is larger, the number of contact points between the fillers is larger, and thus the thermal conductivity of the molded body of the resin composition is higher.

The filler of this embodiment may be subjected to coupling treatment. A coupling treatment agent used for the coupling treatment is not particularly limited insofar as it is a material increasing the bondability between the filler and the resin and the wettability. For example, examples of the material improving the bondability include methacrylic acid strengthening the bond between an acrylic resin and the filler by radical polymerization. In addition thereto, an epoxy resin strengthening the bond by thermosetting is mentioned.

Examples of the type of the resins serving as a raw material of the resin composition include, but are not particularly limited to, plastics, curable resins, rubbers, and the like. Specific examples include polyacrylic acid, polymethacrylic acid, polymethyl acrylate, polymethyl methacrylate, polyethyl acrylate, polyethyl methacrylate, polybutyl acrylate, polybutyl methacrylate, polyethylene, polypropylene, polystyrene, polyester, polyamide, polyimide, polyurethane, polyurea, polycarbonate, and the like. These resins may be used alone or in combination of two or more types thereof.

### [EXAMPLES]

The present invention is more specifically described below by illustration of Examples and Comparative Example.

### (Example 1)

Primary particles of silicon carbide and a sintering aid were mixed to give powder as a raw material. As the primary particles of the silicon carbide, silicon carbide powder having a particle size #40000 (model number: GC40000) was used. The primary particle diameter D50 of the silicon carbide powder is 0.26 µm. The primary particle diameter D50 means the particle diameter at which the cumulative frequency from the small particle diameter side is 50% in the cumulative particle diameter distribution on a volume basis of the powder.

As the sintering aid, aluminum nitrate 9-hydrate (Al(NO₃)₃·9H₂O) powder was used. The used amount of the sintering aid was set to 30% by mass of the used amount of the primary particles of the silicon carbide (2.16% by mass in terms of aluminum).

Next, the primary particles of the silicon carbide and the sintering aid were dispersed in a solvent, such as water, to give a slurry. The solid concentration of the slurry is 16.3% by mass. This slurry was fed to a disc type spray dryer L-8i model manufactured by OHKAWARA KAKOHKI CO., LTD., to be granulated to give a granulated substance of mixed powder of the primary particles of the silicon carbide and the sintering aid.

Next, the granulated substance of the mixed powder of the primary particles of the silicon carbide and the sintering aid was sintered using a sintering furnace to manufacture sintered bodies (secondary particles). The operating conditions of the sintering furnace were as follows: atmosphere of argon; sintering temperature of 1900°C; and sintering time of 4 hours.

Some of the obtained sintered bodies are bonded in some cases. Therefore, when bonded, the sintered bodies are crushed using a high-speed rotary mill (pin mill). The crushed sintered bodies were classified using a jet classifier, and sintered bodies having small particle diameters are removed. Thereafter, the particle size was adjusted using a vibrating sieving machine capable of sieving out particles having a particle diameter of 25 µm or more and 53 µm or less. Thus, a filler containing sintered bodies (secondary particles) having a particle diameter of 30 µm or more and 60 µm or less was obtained.

### (Example 2)

A filler of Example 2 was manufactured in the same manner as in Example 1, except for using silicon carbide powder having a particle size #2000 (model number: GC#2000, primary particle diameter D50: 6.7 µm) as the primary particles of the silicon carbide, obtaining powder serving as a raw material by mixing primary particles of silicon carbide, a sintering aid, and a resin binder, and the operating conditions of the sintering furnace.

The operating conditions of the sintering furnace are as follows. More specifically, in Example 2, pre-firing for removing the binder is performed prior to sintering. In detail, first, the pre-firing is performed under the conditions of an atmosphere of nitrogen, a sintering temperature of 800°C, and a sintering time of 0.5 hour, followed by sintering under the conditions of an atmosphere of argon, a sintering temperature of 1900°C, and a sintering time of 4 hours.

### (Example 3)

A filler of Example 3 was manufactured in the same manner as in Example 1, except that the sintering temperature was 1850°C.

### (Example 4)

A filler of Example 4 was manufactured in the same manner as in Example 1, except that the sintering temperature was 1800°C.

### (Example 5)

A filler of Example 5 was manufactured in the same manner as in Example 2, except that the sintering temperature was 1850°C.

### (Comparative Example 1)

A filler of Comparative Example 1 was manufactured in the same manner as in Example 1, except that no sintering aid was used and powder serving as a raw material contained only primary particles of silicon carbide.

For the obtained fillers of Examples 1 to 5 and Comparative Example 1, the surfaces and the cut surfaces were observed using a scanning electron microscope (SEM) and SEM images were photographed and crystal structure analysis by an X-ray diffraction method was performed. In addition, the average secondary particle diameter D50, the specific surface area, and the granule strength of the fillers of Examples 1 to 5 and Comparative Example 1 were measured. Further, resin compositions each containing a mixture of each filler and a resin were molded to give molded bodies, and the thermal conductivity of the molded bodies was measured.

### <Average secondary particle diameter D50>

The average secondary particle diameter D50 of the fillers of Examples 1 to 5 and Comparative Example 1 was measured using a laser diffraction/scattering particle diameter distribution analyzer LA-300 manufactured by HORIBA, Ltd. The results are shown in Table 1.

**[Table 1]**

| | D50 of primary particles (µm) | Sintering aid | Binder | D50 of secondary particles (µm) | Specific surface area (m²/g) | Granule strength (MPa) | Thermal conductivity (W/(m·K)) |
|---|---|---|---|---|---|---|---|
| Ex. 1 | 0.26 | Used | Not used | 42.5 | 0.12 | 767 | 0.295 |
| Ex. 2 | 6.7 | Used | Used | 42.1 | 0.24 | 45 | 0.273 |
| Ex. 3 | 0.26 | Used | Not used | 39.7 | 0.16 | 920 | 0.295 |
| Ex. 4 | 0.26 | Used | Not used | 39.4 | 0.13 | 992 | 0.269 |
| Ex. 5 | 6.7 | Used | Used | 45.8 | 0.24 | 56 | 0.249 |
| Comp. Ex. 1 | 0.26 | Not used | Not used | 43.2 | 0.98 | 22 | 0.230 |

### <Specific surface area>

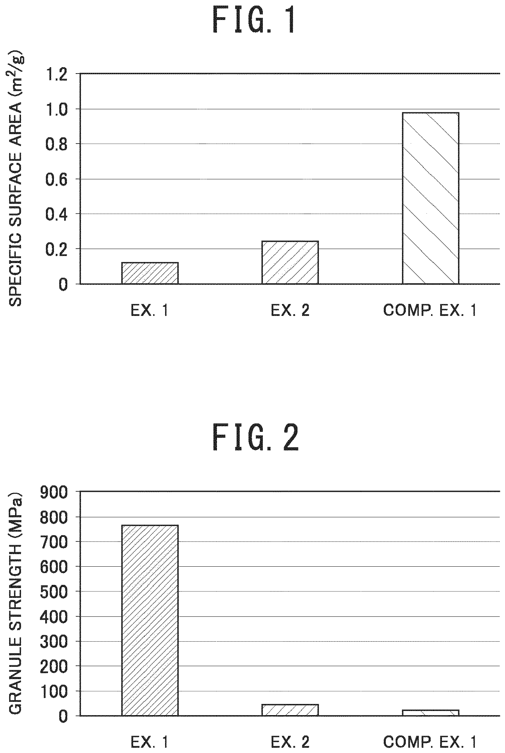

The specific surface area of the fillers of Examples 1 to 5 and Comparative Example 1 was measured using a fully automatic BET specific surface area analyzer Macsorb (Registered Trademark) manufactured by MOUNTECH Co., LTD. The results are shown in Table 1 and the graph of FIG. 1.

### <Granule strength>

The granule strength of the fillers of Examples 1 to 5 and Comparative Example 1 was measured using a microcompression testing device MCT-200 manufactured by Shimadzu Corporation. A microcompression testing method is as follows. Ten particles having a secondary particle diameter of about D50 were randomly selected, the granule strength of each particle was measured using a microcompression testing device, and then the average value of these measurement values was used as the granule strength of the filler. The measurement conditions are a loading rate of 12.96 mN/sec and a load holding time of 1 sec. The results are shown in Table 1 and the graph of FIG. 2.

### <SEM image>

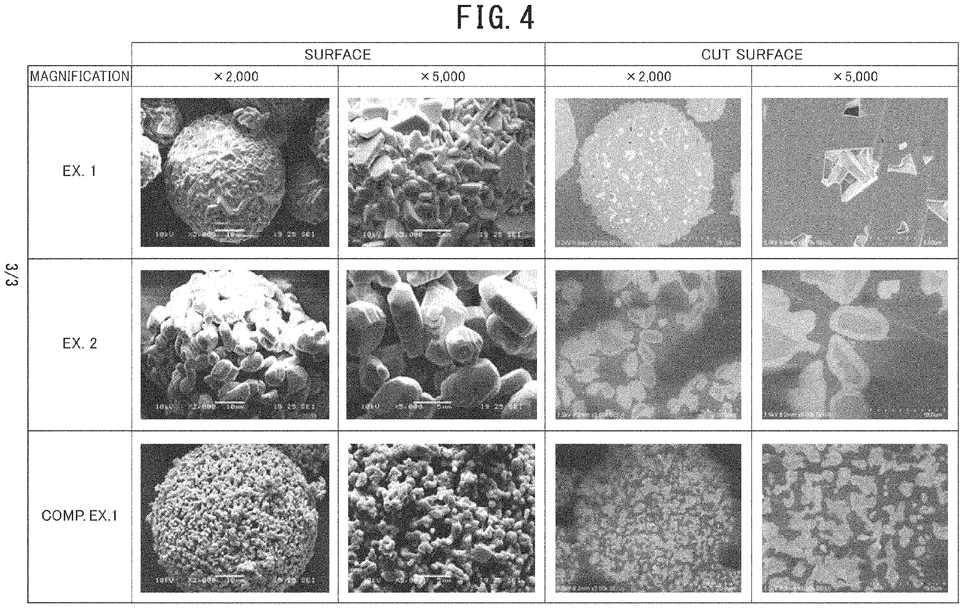

The SEM images of the surfaces and the cut surfaces of the fillers were photographed at magnifications of 2,000x and 5,000x, respectively. The results are collectively shown in FIG. 4. The SEM images of the surfaces of the fillers photographed at a magnification of 5,000x show that, for the fillers of Examples 1, 2, the primary particles of the silicon carbide constituting the fillers have a shape derived from a hexagonal crystal (α-SiC) due to crystal growth.

### <X-ray diffraction>

The crystal structure analysis of the fillers of Examples 1, 2 was performed using an automated multipurpose X-ray diffractometer Ultima IV manufactured by Rigaku Corporation. The X-ray diffraction results showed that the fillers of Examples 1, 2 were free from β-SiC and contained α-SiC.

### <Thermal conductivity>

The thermal conductivity of the fillers of Examples 1 to 5 and Comparative Example 1 was measured using a thermal conductivity meter QTM-500 manufactured by KYOTO ELECTRONICS MANUFACTURING CO., LTD. A method for measuring the thermal conductivity is a heat ray method. As pretreatment of a measurement sample, the sample was dried for 30 minutes or more in a constant temperature thermostat bath adjusted to 105°C. Thereafter, the sample is allowed to naturally cool in a desiccator having a relative humidity of 25% or less for 1 hour or more. Then, the sample was charged into a measuring cell, and 100 mL or more of the sample was spread while tapping the measuring cell.

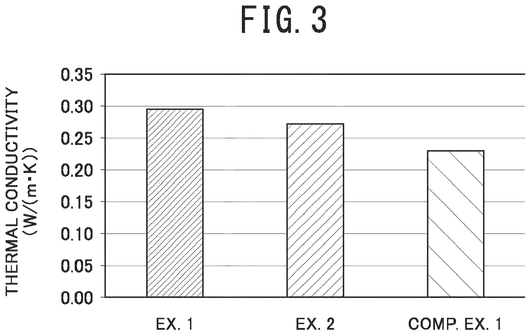

The results are shown in Table 1 and the graph of FIG. 3. As is understood from Table 1 and the graphs of FIGS. 1, 2, 3, the fillers of Examples 1 to 5 had thermal conductivity higher than that of the filler of Comparative Example 1 because the specific surface area of the fillers was 0.25 m²/g or less and the granule strength was 45 MPa or more.

## Claims

1. A filler comprising:
secondary particles which are sintered bodies of powder containing primary particles of ceramic, wherein
a specific surface area measured by a BET method is 0.25 m²/g or less, and
granule strength measured by a microcompression test is 45 MPa or more.

2. The filler according to claim 1, wherein
the specific surface area measured by the BET method is 0.16 m²/g or less,
the granule strength measured by the microcompression test is 750 MPa or more, and
a ratio between an average primary particle diameter of the primary particles of the ceramic and an average secondary particle diameter of the secondary particles is 1:100 to 1:200.

3. The filler according to claim 1 or claim 2, wherein
the ceramic is silicon carbide.

4. A molded body comprising:
a resin composition containing the filler according to any one of claims 1 to 3 and a resin.

5. A heat dissipating material comprising:
the molded body according to claim 4.
